## Europäisches Patentamt
## European Patent Office
## Office européen des brevets

(19)

(11) Numéro de publication: **0 250 317**
B1

(12)

# FASCICULE DE BREVET EUROPEEN

(45) Date de publication du fascicule du brevet:
08.08.90

(51) Int. Cl.⁵: **G05B 19/04,** G05B 9/03

(21) Numéro de dépôt: 87401356.8

(22) Date de dépôt: 17.06.87

(54) Procédé et dispositif pour la commande redondante d'un organe de puissance.

(30) Priorité: **18.06.86 FR 8609148**

(43) Date de publication de la demande:
**23.12.87 Bulletin 87/52**

(45) Mention de la délivrance du brevet:
**08.08.90 Bulletin 90/32**

(84) Etats contractants désignés:
**BE DE ES GB IT NL SE**

(56) Documents cités:
**DE-A- 3 302 223**
**FR-A- 2 561 410**
**US-A- 4 415 884**

**ELEKTROTECHNISCHE ZEITSCHRIFT,**
**vol. 102, no. 18, septembre 1981, pages 973-977, Berlin,**
**DE; H. CEZANNE: "Elektronische Steuerungen in**
**Zweikanalausführung mit Antivalenzüberwachung"**
**VDI-ZEITSCHRIFT,**
**vol. 122, no. 1/2, janvier 1980, pages 17-20; W. JANNING:**
**"Zweikanalige Pressensicherheitssteuerung mit einem**
**speicherprogrammierbaren Steuerungssystem"**

(73) Titulaire: **TELEMECANIQUE, 43-45, Boulevard Franklin Roosevelt, F-92504 Rueil-Malmaison Cedex(FR)**

(72) Inventeur: **Frecon, Richard, Chemin Vieux Verlieu, F-42410 Chavanay(FR)**

(74) Mandataire: **Marquer, Francis et al, Cabinet Moutard 35, Avenue Victor Hugo, F-78960 Voisins le Bretonneux(FR)**

## Description

La présente invention concerne un procédé et un dispositif de commande redondante apte à assurer la commande d'un organe de puissance conformément à un ordre de commande déterminé, par une combinaison logique de deux signaux de commande distincts élaborés par deux circuits respectifs, à partir dudit ordre de commande, et de deux signaux représentatifs de l'état de fonctionnement de ces deux circuits.

D'une manière générale, on sait que l'utilisation de circuits redondants pour effectuer une commande répond essentiellement à des besoins de sécurité. A cet effet, la solution la plus simple consiste à doubler les circuits de commande et à les substituer l'un à l'autre lorsqu'une défaillance est détectée sur le circuit en fonctionnement.

Toutefois, il s'avère que cette solution présente un certain nombre d'inconvénients et, en particulier, celui résultant du fait qu'une défaillance de fonctionnement du circuit de commande en fonctionnement se traduira obligatoirement, au moins pendant le temps de mise en service du deuxième circuit de commande, par une discordance entre l'ordre de commande et l'état effectif du dispositif commandé. C'est la raison pour laquelle cette solution ne convient pas aux automatismes utilisés, notamment en chimie et en pétrochimie qui ne permettent aucune interruption du processus (il n'est pas toujours possible d'interrompre une réaction chimique) et une très grande sécurité.

En outre, il est nécessaire de prévoir dans ces systèmes de commande des moyens permettant de s'assurer que le circuit de commande mis en attente en vue de se substituer à l'autre lors d'une défaillance, fonctionne correctement.

L'invention a donc pour objet de supprimer ces inconvénients et de faire en sorte qu'indépendamment de l'état de panne de l'un des deux circuits de commande, l'état du dispositif commandé corresponde toujours à l'ordre de commande.

Elle propose plus particulièrement à cet effet un procédé pour la commande redondante d'un organe de puissance conformément à des ordres de commande élaborés par au moins un dispositif de commande numérique et/ou appliqués à ce dispositif de commande numérique, ce procédé étant plus particulièrement caractérisé en ce qu'il comprend :

- l'application au dispositif de puissance d'un signal de commande résultant d'une combinaison logique de deux signaux logiques différents l'un de l'autre délivrés par deux sorties distinctes du dispositif de commande numérique et élaborés par celui-ci, de manière à ce que ledit signal de commande soit conforme aux susdits ordres de commande ;

- la détection des défaillances pouvant affecter les signaux délivrés par lesdites sorties ; et

- lorsqu'une défaillance du signal émis par l'une des sorties a été détectée, la modification du signal émis par l'autre sortie, en fonction de la nature de cette défaillance, pour faire en sorte que le signal résultant de ladite combinaison logique demeure toujours conforme aux ordres de commande.

Avantageusement, les signaux délivrés par lesdites sorties du dispositif de commande numérique consisteront en des signaux binaires et la combinaison de ces signaux en vue d'obtenir le signal de commande sera réalisée par la fonction OU EXCLUSIF. Le signal de commande consistera alors en un signal binaire présentant un état 1 dans le cas où, au même instant, les états logiques des signaux délivrés par lesdites sorties sont différents, et un état logique 0 dans le cas où ces états sont identiques.

Dans le cas d'une défaillance de l'une des sorties se traduisant par un blocage à l'un des deux états du signal délivré par cette sortie, le signal émis par l'autre sortie consistera alors en l'image de l'ordre de commande dans le cas d'un blocage à l'état 0 ou en une image complémentée de cet ordre dans le cas d'un blocage à l'état 1.

L'invention peut aussi bien s'appliquer à un dispositif de commande numérique monoprocesseur tel que, par exemple, un automate programmable qui comprendra alors deux sorties aptes à délivrer les deux susdits signaux logiques, qu'à un dispositif de commande à deux processeurs couplés l'un à l'autre et comprenant chacun une sortie affectée à la commande.

Ainsi, dans un mode d'exécution de l'invention faisant intervenir deux processeurs couplés l'un à l'autre et comprenant chacun une sortie destinée à assurer la commande redondante d'un même dispositif de puissance, le procédé selon l'invention comprendra :

- pour engendrer le signal délivré par la sortie du premier processeur, l'élaboration d'un premier signal logique dont les deux états sont représentatifs d'un défaut ou de l'absence de défaut, ce premier signal logique étant obtenu en réalisant la fonction OU EXCLUSIF d'un signal logique image de l'ordre de commande et d'un signal logique issu de la combinaison OU EXCLUSIF de l'état de commande du signal délivré par la sortie du second processeur, et d'un signal crénelé délivré par un oscillateur, et l'application à la sortie du premier processeur, d'un signal résultant de la combinaison OU EXCLUSIF dudit premier signal logique avec ledit signal crénelé ; et

- pour engendrer le signal délivré par la sortie du second processeur, l'élaboration d'un second signal logique dont les deux états sont représentatifs d'un défaut ou de l'absence de défaut, ce second signal logique étant obtenu en réalisant la fonction OU EXCLUSIF d'un signal logique image de l'ordre de commande et d'un signal obtenu de la combinaison logique de l'état de commande du signal délivré par la sortie du premier processeur, et d'un troisième signal résultant lui-même de la combinaison logique de l'ordre de commande élaboré par le second processeur et du susdit signal crénelé, et l'application à la sortie du second processeur, d'un signal résultant de la combinaison OU EXCLUSIF dudit second signal logique avec ledit troisième signal.

Comme précédemment mentionné, l'invention concerne également un dispositif pour la mise en oeuvre du procédé précédemment décrit, ce dispositif faisant intervenir au moins un dispositif de commande apte à élaborer un ordre de commande, ce dispositif étant plus particulièrement caractérisé en ce que ledit dispositif de commande comprend un circuit logique apte à appliquer sur deux sorties distinctes deux signaux logiques dont la combinaison selon la fonction logique OU EXCLUSIF est l'image de l'ordre de commande, et en ce que le dispositif de puissance est commandé par un organe de commande connecté par ses deux entrées aux deuxdites sorties et réalisant la fonction logique OU EXCLUSIF des signaux délivrés par ces deux sorties.

Selon un mode de réalisation particulièrement avantageux de l'invention, dans le cas où le dispositif de puissance consiste en un relais alimenté par une source de courant alternatif, le susdit organe de commande comporte un montage en pont comprenant entre les deux bornes de la source, une première branche comprenant en série une première résistance et un premier interrupteur commandable commandé par le signal fourni par l'une des deux susdites sorties et une deuxième branche comprenant une deuxième résistance et un deuxième interrupteur commandable commandé par le signal fourni par la seconde sortie. Dans ce cas, les deux bornes de la bobine du relais sont respectivement connectées aux deux points médians du pont qui effectuent la jonction de la première résistance avec le premier interrupteur et de la deuxième résistance avec le deuxième interrupteur.

Dans le cas où le dispositif de puissance consiste en un relais alimenté par une source de courant continu, le susdit circuit logique de commande comporte également un montage en pont similaire au précédent. Toutefois, dans ce cas, les deux points médians du pont sont connectées aux bornes de la bobine du relais par l'intermédiaire d'un pont redresseur à diodes.

Des modes de réalisation de l'invention seront décrits ci-après, à titre d'exemples non limitatifs, avec référence aux dessins annexés, dans lesquels :

La figure 1 est une représentation schématique d'un circuit illustrant le principe de la commande d'un organe de puissance par les deux sorties respectives de deux automates programmables ;

La figure 2 est un diagramme représentatif des signaux obtenus en différents points du circuit représenté sur la figure 1 ;

La figure 3 est le schéma d'un circuit permettant d'effectuer la commande d'un relais alimenté en courant alternatif, à partir des signaux délivrés par les sorties des deux automates représentés figure 1 ;

La figure 4 est un schéma analogue à celui de la figure 3, mais dans le cas d'un relais alimenté en courant continu.

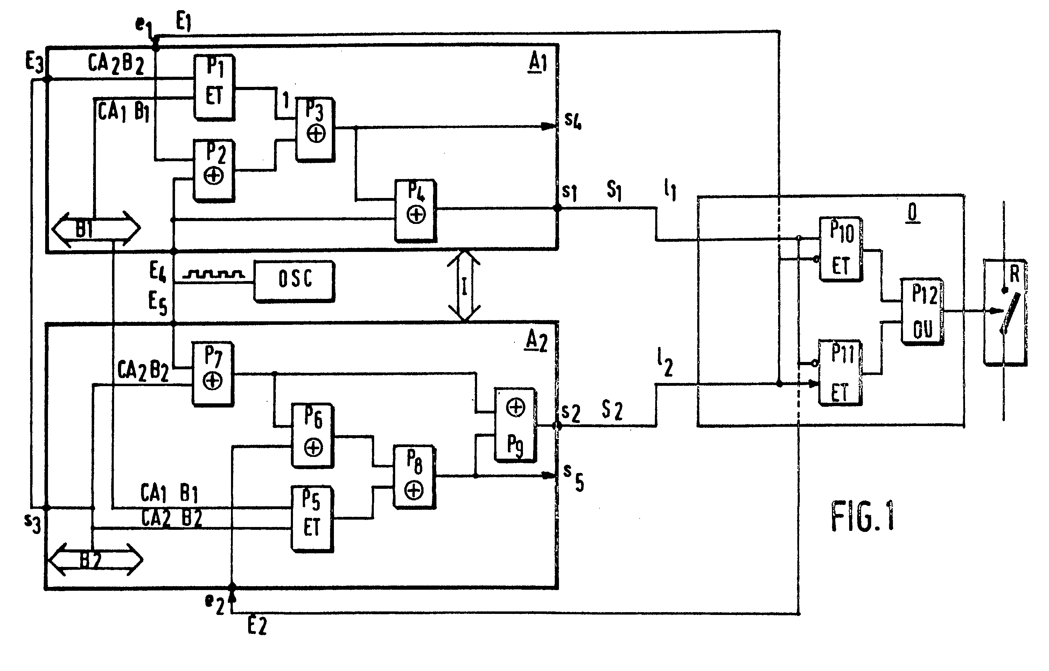

Dans l'exemple représenté sur la figure 1, les deux automates programmables ont été schématisés par les blocs $A_1$, $A_2$ représentés en traits épais.

De ces automates, on n'a fait figurer, pour plus de simplicité, que les éléments intervenant plus spécifiquement dans le dispositif selon l'invention et, en particulier, les sorties $s_1$ à $s_5$, les entrées $e_1$ à $e_5$, les liaisons d'interconnexion I des deux automates, les bus $B_1$, $B_2$ de ces automates, ainsi que les circuits logiques permettant d'élaborer les signaux $S_1$, $S_2$ appliqués aux sorties $s_1$, $s_2$ des automates $A_1$, $A_2$, à partir des ordres de commande engendrés sur les bus $B_1$, $B_2$ par les unités centrales respectives. Bien entendu, les fonctions logiques réalisées par ces circuits pourraient tout aussi bien être implémentées par un logiciel approprié.

Par contre, les unités centrales de ces automates $A_1$, $A_2$ ainsi que tous les autres éléments intervenant de façon classique dans ce type d'appareils, n'ont pas été représentés.

De même, sur cette figure, le dispositif de puissance a été schématisé sous la forme d'un interrupteur commandable R piloté par un organe de commande O.

Le circuit logique permettant d'élaborer le signal $S_1$ appliqué à la borne $s_1$ de l'automate $A_1$ comprend tout d'abord une première porte logique $P_1$ qui réalise la fonction ET et qui reçoit sur ses deux entrées, d'une part, un signal $CA_2B_2$ représentatif de l'ordre de commande engendré sur le bus $B_2$ de l'automate $A_2$ et, d'autre part, un signal $CA_1B_1$ représentatif de l'ordre de commande engendré sur le bus $B_1$ de l'automate $A_1$.

Il est clair qu'en fonctionnement normal, les signaux $CA_1B_1$ et $CA_2B_2$ sont sensiblement identiques, et la porte ET $P_1$ qui ne joue qu'un rôle de synchronisation, délivré à sa sortie un signal image de l'ordre de commande.

Cette sortie de la porte $P_1$ est reliée à l'une des entrées d'une porte $P_3$ réalisant la fonction OU EXCLUSIF (XOR) qui reçoit sur sa deuxième entrée un signal fourni par une porte OU EXCLUSIF $P_2$. Cette porte $P_2$ reçoit, quant à elle, sur l'une de ses deux entrées, un signal représentatif de l'état du signal $S_2$ au niveau de l'organe de commande O associé à l'interrupteur commandable R et, sur son autre entrée, un signal crénelé émanant d'un oscillateur OSC.

En fonctionnement normal, comme on le verra par la suite, cette porte $P_2$ fournit un signal image de l'ordre de commande.

En conséquence, la porte $P_3$ fournira, à sa sortie, un signal dont l'état 0 correspond à l'identité des images de l'ordre de commande élaborées par les portes $P_1$ et $P_2$. Par contre, lorsqu'il y a discordance entre ces deux images, la porte $P_3$ passera à l'état 1 en indiquant ainsi un défaut.

La sortie de la porte $P_3$ est reliée, d'une part, à la borne $s_4$ sur laquelle peut être connecté par exemple un organe de signalisation des défauts et, d'autre part, à l'une des deux entrées d'une porte OU EXCLUSIF $P_4$ qui reçoit sur son autre entrée le signal crénelé provenant de l'oscillateur OSC.

La sortie de la porte $P_4$ est connectée à la sortie $s_1$ de l'automate qui délivre le signal $S_1$. Il est clair qu'en fonctionnement normal, la porte $P_4$ délivrera un signal crénelé en phase avec celui produit par l'oscillateur. Par contre, dans le cas d'un défaut se traduisant par le passage et à un maintien à l'état 1 de la sortie de la porte $P_3$, les créneaux délivrés par la porte $P_4$ seront en opposition de phase par rapport à ceux de l'oscillateur.

D'une façon analogue, le circuit logique permettant d'élaborer le signal $S_2$ appliqué à la borne $s_2$ de l'automate $A_2$ comprend une porte logique ET $P_5$ qui reçoit sur ses deux entrées, d'une part, un signal CA₁B₁ représentatif de l'ordre de commande engendré sur le bus B₁ de l'automate A₁ et, d'autre part, un signal CA₂B₂ représentatif de l'ordre de commande engendré sur le bus B₂ de l'automate A₂. Cette porte ET P₅ joue rigoureusement le même rôle que la porte P₁.

La sortie de cette porte P₅ est reliée à l'une des entrées d'une porte OU EXCLUSIF P₈ qui reçoit sur sa deuxième entrée un signal fourni par une porte OU EXCLUSIF P₆. Cette porte OU EXCLUSIF P₆ reçoit, quant à elle, sur l'une de ses entrées, un signal représentatif de l'état du signal S₁ au niveau de l'organe de commande O associé à l'interrupteur commandable R et, sur son autre entrée, un signal émis par une porte OU EXCLUSIF P₇.

Cette porte P₇ reçoit, d'une part, le signal crénelé fourni par l'oscillateur et, d'autre part, le signal CA₂B₂.

Il est clair qu'en fonctionnement normal, la porte P₇ fournit un signal crénelé dans lequel les créneaux en phase avec ceux de l'oscillateur correspondent à l'état 0 de l'ordre de commande et les créneaux en opposition de phase correspondent à l'état 1 de cet ordre de commande. La combinaison OU EXCLUSIF dans la porte P₆ de ce signal et du signal E₂ fournit donc un signal image de l'ordre de commande. A la sortie de la porte P₈, on obtiendra donc un signal dont l'état 0 signifie un fonctionnement normal et l'état 1 signifie un défaut.

Les sorties des portes P₇ et P₈ sont respectivement connectées aux deux entrées d'une porte OU EXCLUSIF P₉ dont la sortie est connectée à sa sortie s₂.

En fonctionnement normal, cette porte P₉ fournira un signal similaire à celui fourni par la porte P₇. Par contre, lors d'un défaut (sortie de P₈ à l'état 1) elle fournira un signal en opposition de phase avec le signal délivré par la porte P₇.

Dans cet exemple, l'organe de commande associé à l'interrupteur commandable R réalise la fonction OU EXCLUSIF au moyen d'un circuit logique comprenant deux portes ET P₁₀ et P₁₁ qui comprennent chacune une entrée directe et une entrée complémentée, et d'une porte OU P₁₂ qui reçoit les signaux fournis par les portes ET P₁₀ et P₁₁. La sortie de cette porte P₁₂ assure la commande de l'interrupteur R. Les entrées directes des portes ET P₁₀ et P₁₁ sont respectivement connectées aux sorties s₁ et s₂ des automates A₁ et A₂, grâce à une liaison à distance par des conducteurs lignes (L₁ et L₂). Par ailleurs, l'entrée complémentée de l'une des portes ET P₁₀, P₁₁ est reliée à l'entrée directe de l'autre porte ET P₁₀, P₁₁. En outre, l'entrée directe de la porte P₁₀ est reliée à l'entrée e₂ de l'automate A₂ pour fournir le signal E₂, tandis que l'entrée directe de la porte P₁₁ est reliée à l'entrée e₁ de l'automate A₁ pour fournir le signal E₁.

Il est clair qu'en fonctionnement normal, la combinaison logique OU EXCLUSIF des signaux S₁ et S₂ permet d'obtenir un signal image de l'ordre de commande.

Il en est de même lorsqu'il se produit un défaut sur l'un des circuits associés aux automates A₁ et A₂.

Ainsi, si par suite d'une rupture de la ligne l₁ le signal à l'entrée directe de la porte P₁₀ est forcé à 0, le signal E₂ sera également à l'état 0. L'entrée complémentée de la porte ET P₁₁ sera portée à l'état 0 de sorte que cette porte P₁₁ fournira donc un signal image de la sortie S₂.

La porte P₆ dont une entrée est forcée à 0 (signal E₂) fournit à sa sortie un signal similaire à celui de la porte P₇, c'est-à-dire un signal crénelé en phase avec celui de l'oscillateur lorsque l'ordre de commande est à l'état 0 et en opposition de phase lorsque cet ordre est à l'état 1.

A la sortie de la porte P₈, quel que soit l'état de l'ordre, on obtient un signal crénelé en phase avec le signal crénelé fourni par l'oscillateur, et à la sortie s₂ on a alors un signal S₂ image de l'ordre de commande.

De même, dans le cas où, par suite d'une avarie, le signal appliqué à l'entrée directe de la porte P₁₀ demeure bloqué à 1, la porte P₁₁ sera bloquée, tandis que la porte P₁₀ fournira à sa sortie le complément du signal S₂. Dans ce cas, le signal E₂ est à l'état 1 et l'on obtient en conséquence un signal S₂ qui est le complément de l'ordre de commande.

Un processus similaire se produirait dans le cas d'un blocage à 0 ou à 1 de la ligne l₂, le signal S₁ étant alors dans ce cas une image directe ou une image complémentée de l'ordre de commande.

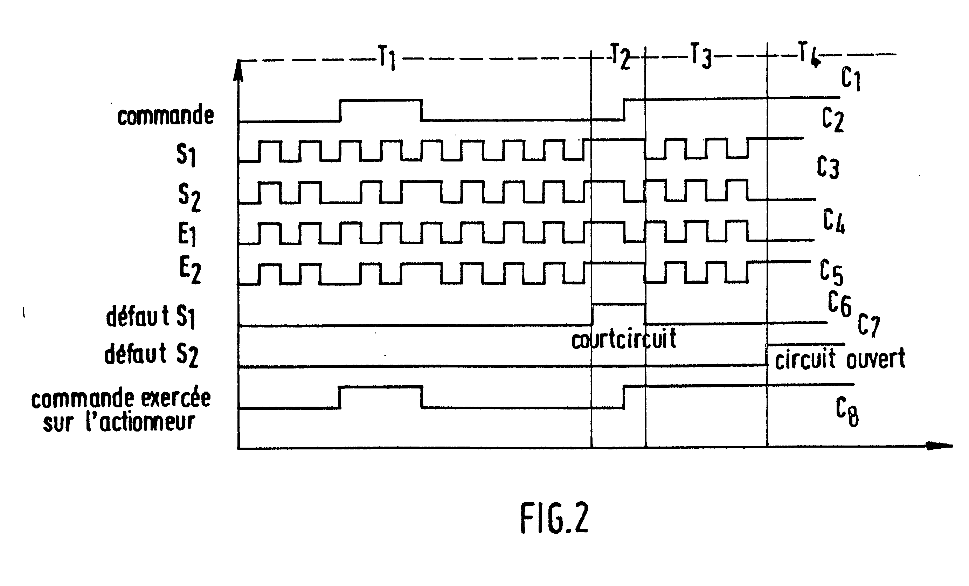

Un tel fonctionnement est illustré par les oscillogrammes représentés sur la figure 2 dans laquelle la période de temps T₁ correspond à un fonctionnement normal de l'automate, la période T₂ correspond à un fonctionnement dû à un défaut entraînant un blocage à l'état 0 de la sortie s₁, et la période T₃ correspond à un fonctionnement dû à un défaut entraînant un blocage à l'état 1 de la sortie s₁.

D'une façon plus précise, l'oscillogramme C₁ est une représentation dans le temps de l'ordre de commande, celui-ci passant, dans chacune des susdites périodes, de l'état 0 à l'état 1.

Les oscillogrammes C₁ et C₂ montrent l'évolution dans le temps des signaux S₁ et S₂ appliqués aux bornes s₁ et s₂, compte tenu de l'ordre de commande.

Les oscillogrammes C₄ et C₅ montrent l'évolution dans le temps des signaux E₁ et E₂.

Les oscillogrammes C₆ et C₇ sont des courbes dont l'état 1 signifie la présence d'un défaut de fonctionnement. Ainsi, dans la courbe C₆, le passage à l'état 1 correspond à un blocage à l'état 1 du signal S₁ et, dans la courbe C₇, le passage à l'état 1 correspond à un forçage à 0 du signal S₂.

L'oscillogramme C₈ correspond au signal de commande appliqué à l'interrupteur commandable R qui est conforme à l'ordre de commande illustré en C₁.

Comme on peut le voir, pendant la période T₁, le signal S₁ est un signal crénelé en phase avec le signal produit par l'oscillateur, tandis que le signal S₂ correspond au signal S₁ lorsque l'ordre de commande est à l'état 0 et en opposition de phase lorsque l'ordre de commande est à l'état 1.

Au cours de la période T₂, le signal S₁ est bloqué à 1, tandis que le signal S₂ consiste en le complément de l'ordre de commande.

Au cours de la période T₃, aucun défaut n'est signalé, l'ordre de commande est à l'état 1 et les signalé, l'ordre de commande est à l'état 1 et les signaux $S_1$ et $S_2$ sont en opposition de phase.

Pendant la période $T_4$, le signal $S_2$ est bloqué à 0 en entraînant le maintien à 1 du signal $S_1$.

On constate donc que dans ce système, la détection de l'état de panne de l'une quelconque des sorties et sa signalisation s'exécutent en temps réel et que le dépannage des sorties défectueuses est transparent pour le système puisqu'il se réalise sous tension, sans arrêt et sans perturbation du système.

Bien entendu, l'invention ne se limite pas à un type de dispositif de puissance ni à un organe de commande particulier.

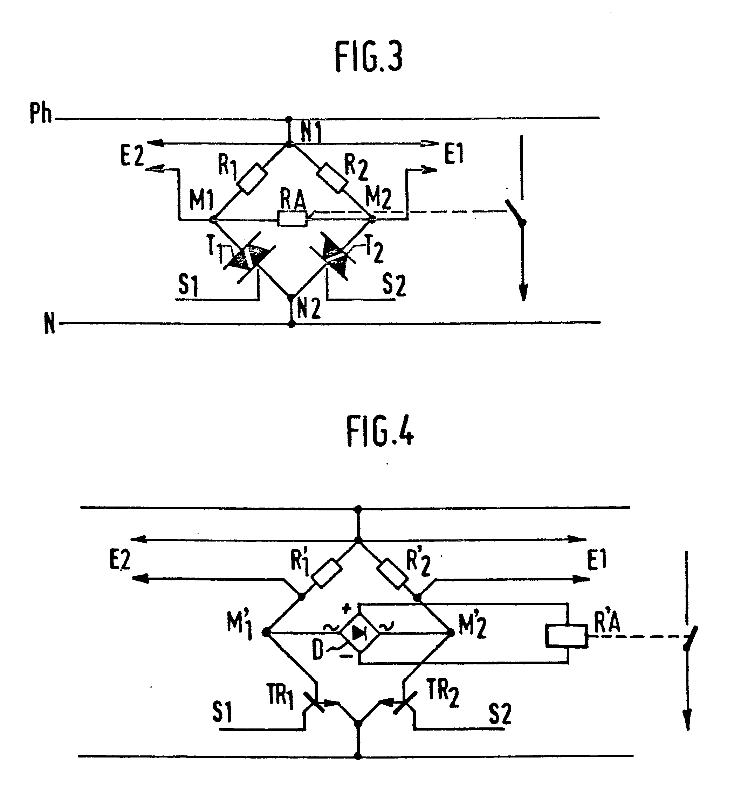

Ainsi, les figures 3 et 4 montrent deux exemples d'exécution particulièrement avantageux d'organes de commande d'un relais à courant alternatif (figure 3) et à courant continu (figure 4).

D'une façon plus précise, l'organe de commande représenté sur la figure 3 fait intervenir un montage en pont dont les deux points extrêmes $N_1$, $N_2$ sont reliés au conducteur de phase Ph et au neutre N d'une ligne d'alimentation en courant alternatif. Ce montage comprend deux triacs $T_1$, $T_2$ respectivement montés entre le point extrême $N_2$ et les deux points médians $M_1$, $M_2$ du pont et deux résistances $R_1$, $R_2$ assurant la liaison entre les deux points médians $M_1$, $M_2$ et le point extrême $N_1$.

Les deux bornes de la bobine RA du relais sont alors respectivement connectées aux deux points médians $M_1$, $M_2$ du pont.

Par ailleurs, la gâchette du triac $T_1$ est connectée à la sortie $s_1$ de l'automate $A_1$ par exemple au moyen de la ligne $L_1$ et reçoit, par conséquent, le signal $S_1$, tandis que la gâchette du triac $T_2$ est connectée à la sortie $s_2$ de l'automate $A_2$ par exemple au moyen de la ligne $L_2$ et reçoit, par conséquent, le signal $S_2$.

A l'état 1, les signaux $S_1$ et $S_2$ provoquent la conduction des triacs correspondants $T_1$ et $T_2$, tandis qu'à l'état 0 ces signaux provoquent le blocage de ces triacs.

Le fonctionnement de cet organe de commande est donc le suivant.

Dans le cas où l'un des signaux $S_1$, $S_2$ est à l'état 1, tandis que l'autre signal est à l'état 0, l'un des deux triacs sera passant, tandis que l'autre sera bloqué. La bobine RA du relais sera donc traversée par le courant alternatif de la ligne et le relais sera à l'état 1.

Dans le cas où les deux signaux $S_1$, $S_2$ sont à l'état 1, les deux triacs $T_1$ et $T_2$ seront à l'état passant. Les deux bornes de la bobine RA seront donc au même potentiel, de sorte qu'aucun courant ne traversera la bobine RA et, qu'en conséquence, le relais sera à l'état 0.

Dans le cas où les deux signaux $S_1$, $S_2$ sont à l'état 0, les deux triacs $T_1$ et $T_2$ seront à l'état bloqué et, d'une façon analogue à la précédente, la bobine RA dont les bornes seront portées à un même potentiel, ne sera pas traversée par un courant et le relais sera à l'état 0.

On constate donc que la commande du relais est bien assurée par la combinaison logique OU EXCLUSIF des signaux $S_1$ et $S_2$.

Avantageusement, les signaux $E_1$ et $E_2$ pourront être prélevés sur les points médians $M_1$ et $M_2$ du pont, de sorte que les défaillances des triacs $T_1$ et $T_2$ seront prises en compte par le système.

L'organe de commande représenté sur la figure 4, qui est destiné à un relais à courant continu comprend, d'une façon analogue, un montage en pont comprenant deux résistances $R'_1$, $R'_2$ et, à la place des triacs $T_1$, $T_2$, deux transistors $TR_1$, $TR_2$ respectivement connectés par leur base aux sorties $s_1$ et $s_2$ des automates $A_1$ et $A_2$.

Dans ce cas, les points médians $M'_1$, $M'_2$ du pont sont connectés aux deux entrées alternatives d'un pont redresseur à diodes D dont les deux sorties continues sont respectivement reliées aux deux bornes de la bobine R'A du relais.

Le fonctionnement de cet organe de commande est sensiblement le même que celui de l'organe de commande précédemment décrit, le pont redresseur à diodes D étant alors destiné à s'affranchir des inversions de polarité du courant circulant entre les deux points médians du pont $R'_1$, $R'_2$, $TR_1$, $TR_2$.

Il apparaît qu'un avantage important du dispositif de commande redondante précédemment décrit, utilisant un dispositif de puissance tel qu'un relais, consiste en ce que le temps de réponse du système de détection et de correction des défauts est inférieur au temps de réponse du relais, de sorte que dans tous les cas, l'état du dispositif de puissance et, en conséquence, de l'actionneur qui lui est associé correspondent toujours à l'état de la commande.

Un autre avantage de ce circuit consiste en ce que toute défaillance de l'un quelconque des circuits utilisés pour la commande engendrera, sur l'un des deux automates, un ordre de commande erroné qui sera détecté par l'automate valide. Ce dernier élaborera alors un signal de commande tenant compte de cette défaillance.

## Revendications

1. Procédé pour la commande redondante d'un organe de puissance conformément à des ordres de commande élaborés par au moins un dispositif de commande numérique ($A_1$, $A_2$) et/ou appliqués à ce dispositif de commande numérique, ce procédé étant plus particulièrement caractérisé en ce qu'il comprend :

- l'application au dispositif de puissance d'un signal de commande résultant d'une combinaison logique de deux signaux logiques ($S_1$, $S_2$) différents l'un de l'autre délivrés par deux sorties distinctes ($s_1$, $s_2$) du dispositif de commande numérique et élaborés par celui-ci, de manière à ce que ledit signal de commande soit conforme aux susdits ordres de commande;

- la détection des défaillances pouvant affecter les signaux ($S_1$, $S_2$) délivrés par lesdites sorties ($s_1$, $s_2$); et

- lorsqu'une défaillance du signal émis par l'une des sorties ($s_1$, $s_2$) a été détectée, la modification du signal émis par l'autre sortie, en fonction de la nature de cette défaillance, pour faire en sorte que ladite combinaison logique demeure toujours conforme aux ordres de commande.

2. Procédé selon la revendication 1, caractérisé en ce que les signaux délivrés par lesdites sorties du dispositif de commande numérique consistent en des signaux binaires et la combinaison de ces signaux en vue d'obtenir le signal de commande est réalisée par la fonction OU EXCLUSIF, et en ce que, dans ce cas, le signal de commande consiste alors en un signal binaire présentant un état 1 dans le cas où, au même instant, les états logiques des signaux délivrés par lesdites sorties ($s_1$, $s_2$) sont différents, et un état logique 0 dans le cas où ces états sont identiques.

3. Procédé selon l'une des revendications 1 ou 2, caractérisé en ce que le susdit dispositif de commande numérique ($A_1$, $A_2$) comprend un processeur tel qu'un automate programmable comportant deux sorties ($s_1$, $s_2$) aptes à délivrer les deux susdits signaux logiques.

4. Procédé selon l'une des revendications 1 ou 2, caractérisé en ce que le susdit dispositif de commande numérique comprend deux processeurs ($A_1$, $A_2$) couplés l'un à l'autre et comprenant chacun une sortie ($s_1$, $s_2$) délivrant l'un des deux susdits signaux de commande.

5. Procédé selon la revendication 4, caractérisé en ce qu'il comprend :

- pour engendrer le signal délivré par la sortie ($s_1$) du premier processeur ($A_1$), l'élaboration d'un premier signal logique dont les deux états sont représentatifs d'un défaut ou de l'absence de défaut, ce premier signal logique étant obtenu en réalisant la fonction OU EXCLUSIF d'un signal logique image de l'ordre de commande et d'un signal logique issu de la combinaison OU EXCLUSIF de l'état de commande du signal délivré par la sortie ($s_2$) du second processeur ($A_2$), et d'un signal crénelé délivré par un oscillateur, et l'application à la sortie du premier processeur ($A_1$), d'un signal résultant de la combinaison OU EXCLUSIF dudit premier signal logique avec ledit signal crénelé ; et

- pour engendrer le signal délivré par la sortie ($s_2$) du second processeur ($A_2$), l'élaboration d'un second signal logique dont les deux états sont représentatifs d'un défaut ou de l'absence de défaut, ce second signal logique étant obtenu en réalisant la fonction OU EXCLUSIF d'un signal logique image de l'ordre de commande et d'un signal obtenu de la combinaison logique de l'état de commande du signal délivré par la sortie ($s_1$) du premier processeur ($A_1$), et d'un troisième signal résultant lui-même de la combinaison logique de l'ordre de commande élaboré par le second processeur et du susdit signal crénelé, et l'application à la sortie ($s_2$) du second processeur ($A_2$), d'un signal résultant de la combinaison OU EXCLUSIF dudit second signal logique avec ledit troisième signal.

6. Dispositif pour la mise en œuvre du procédé selon l'une des revendications précédentes, ce dispositif faisant intervenir au moins un dispositif de commande apte à élaborer un ordre de commande, caractérisé en ce qu'il comprend un circuit logique apte à appliquer sur deux sorties distinctes ($s_1$, $s_2$) deux signaux logiques ($S_1$, $S_2$) dont la combinaison selon la fonction logique OU EXCLUSIF est l'image de l'ordre de commande, en ce que le dispositif de puissance est commandé par un organe de commande (0) connecté par ses deux entrées aux deuxdites sorties ($s_1$, $s_2$) et réalisant la fonction logique OU EXCLUSIF des signaux ($S_1$, $S_2$) délivrés par ces deux sorties, et en ce que la sortie ($M_1$, $M_2$ – $M'_1$, $M'_2$) dudit organe de commande (0) est reliée à deux entrées ($e_1$, $e_2$) du dispositif de commande prévues pour recevoir un signal ($E_1$, $E_2$) représentatif de l'état de commande du signal ($S_1$, $S_2$) délivré par les susdites sorties ($s_1$, $s_2$) du dispositif de commande.

7. Dispositif selon la revendication 6, dans lequel le dispositif de puissance consiste en un relais alimenté par une source de courant alternatif (Ph), (N), caractérisé en ce que le susdit organe de commande comporte un montage en pont comprenant entre les deux bornes de la source, une première branche comprenant en série une première résistance ($R_1$) et un premier interrupteur commandable ($T_1$) commandé par le signal ($S_1$) fourni par l'une des deux susdites sorties et une deuxième branche comprenant une deuxième résistance ($R_2$) et un deuxième interrupteur commandable ($T_2$) commandé par le signal ($S_2$) fourni par la seconde sortie ($s_2$), et en ce que les deux bornes de la bobine (RA) du relais sont respectivement connectées aux deux points médians ($M_1$, $M_2$) du pont qui effectuent la jonction de la première résistance ($R_1$) avec le premier interrupteur ($T_1$) et de la deuxième résistance ($R_2$) avec le deuxième interrupteur ($T_2$).

8. Dispositif selon la revendication 6, dans lequel le dispositif de puissance consiste en un relais alimenté par une source de courant continu, caractérisé en ce que le susdit organe de commande comporte un montage en pont comprenant entre les deux bornes de la source, une première branche comprenant en série une première résistance ($R'_1$) et un premier interrupteur commandable ($TR_1$) commandé par le signal ($S_1$) fourni par l'une des deux susdites sorties· ($s_1$) et une deuxième branche comprenant une deuxième résistance ($R'_2$) et un deuxième interrupteur commandable ($TR_2$) commandé par le signal ($S_2$) fourni par la seconde sortie ($s_2$), et en ce que les deux points médians ($M'_1$, $M'_2$) du pont sont connectés aux bornes de la bobine du relais ($R'A$) par l'intermédiaire d'un pont redresseur à diodes (D).

9. Dispositif selon l'une des revendications 7 et 8, caractérisé en ce que les deux points médians ($M_1$, $M_2$ – $M'_1$, $M'_2$) du montage en pont sont respectivement reliés à deux entrées respectives ($e_1$, $e_2$) du dispositif de commande prévues pour recevoir un signal ($E_1$, $E_2$) représentatif de l'état de commande du signal ($S_1$, $S_2$) délivré par les susdites sorties ($s_1$, $s_2$) du dispositif de commande.

## Patentansprüche

1. Verfahren zur redundanten Steuerung eines leistungsgesteuerten Organs, gemäss Steuerbefehlen, die von mindestens einer digitalen Steuervorrichtung ($A_1$, $A_2$) ausgearbeitet werden und/oder auf besagte digitale Steuervorrichtung angewandt werden, wobei besagtes Verfahren insbesondere dadurch gekennzeichnet ist, dass es beinhaltet:

Vorrichtung eines Steuersignals, welches sich aus der logischen Kombination zweier logischer voneinander verschiedener Signale ($S_1$, $S_2$) ergibt, die von zwei verschiedenen Ausgängen ($s_1$, $s_2$) der digitalen Steuervorrichtung abgegeben und von dieser ausgearbeitet werden, sodass besagtes Steuersignal den besagten Steuerbefehlen entspricht;
- die Erfassung von Störungen, welche die von besagten Ausgängen ($s_1$, $s_2$) abgegebenen Signale ($S_1$, $S_2$) beeinflussen können; und
- wenn eine Störung des von einem der Ausgänge ($s_1$, $s_2$) abgegebenen Signals erfasst wurde, die Abänderung, je nach der Art der Störung, des vom anderen Ausgang abgegebenen Signals, damit die besagte logische Kombination immer den Steuerbefehlen entspricht.

2. Verfahren nach Anspruch 1, dadurch gekennzeichnet, dass die von den besagten Ausgängen der digitalen Steuervorrichtung abgegebenen Signale aus Bitsignalen bestehen und dass die Kombination dieser Signale zur Erhaltung des Steuersignals durch die exklusive Oderfunktion bewirkt wird und dass in diesem Falle das Steuersignal von einem Bitsignal gebildet wird, mit einem Status 1, wenn im gleichen Augenblick die logischen Zustände der von den besagten Ausgängen ($s_1$, $s_2$) abgegebenen Signale verschieden sind und einem logischen Status 0, wenn diese Zustände identisch sind.

3. Verfahren nach einem der Ansprüche 1 oder 2, dadurch gekennzeichnet, dass besagte digitale Steuervorrichtung ($A_1$, $A_2$) einen Prozessor, wie z.B. einen programmierbaren Automaten aufweist, mit zwei Ausgängen ($s_1$, $s_2$), die besagte zwei logische Signale abgeben können.

4. Verfahren nach einem der Ansprüche 1 oder 2, dadurch gekennzeichnet, dass besagte digitale Steuervorrichtung zwei Rechner ($A_1$, $A_2$) aufweist, die zusammengekuppelt sind und jeweils einen Ausgang ($s_1$, $s_2$) aufweisen, der eines der zwei besagten Steuersignale abgibt.

5. Verfahren nach Anspruch 4, dadurch gekennzeichnet, dass es beinhaltet
- um das vom Ausgang ($s_1$) des ersten Rechners ($A_1$) abgegebene Signal zu erzeugen, die Ausarbeitung eines ersten logischen Signals, dessen zwei Zustände eine Störung oder das Nichtvorhandensein einer Störung darstellen, wobei man besagtes erstes logisches Signal erhält, indem man die exklusive Oderfunktion eines logischen Signals bewirkt, welches das Abbild des Steuerbefehls ist, sowie eines logischen Signals, das sich aus der exklusiven Oderkombination des Steuerstatus des vom Ausgang ($s_2$) des zweiten Rechners ($A_2$) abgegebenen Signals ergibt und eines von einem Oszillator abgegebenen Rechteckimpulssignals, und die Anwendung an den Ausgang des ersten Rechners ($A_1$) eines Signals, das sich aus der exklusiven Oderkombination des besagten ersten, logischen Signals mit besagtem Rechteckimpulssignal ergibt; und
- um das vom Ausgang ($s_2$) des zweiten Rechners ($A_2$) abgegebene Signal zu erzeugen, die Ausarbeitung eines zweiten logischen Signals, dessen zwei Zustände eine Störung oder das Nichtvorhandensein einer Störung darstellen, wobei besagtes zweites logisches Signal durch die exklusive Oderfunktion eines logischen Signals bewirkt wird, welches das Abbild des Steuerbefehls ist, und eines Signals, das man durch die logische Kombination des Steuerzustandes des vom Ausgang ($s_1$) des ersten Rechners ($A_1$) abgegebenen Signals erhält und eines dritten Signals, das sich seinerseits aus der logischen Kombination des vom zweiten Rechner ausgearbeiteten Steuerbefehls und des besagten Rechteckimpulssignals ergibt, und die Anwendung an den Ausgang ($s_2$) des zweiten Rechners ($A_2$) eines Signals, welches sich aus der exklusiven Oderkombination des besagten zweiten Signals mit besagtem dritten Signal ergibt.

6. Vorrichtung zur Durchführung des Verfahrens nach einem der vorhergehenden Ansprüche, wobei besagte Vorrichtung mindestens eine Steuervorrichtung zur Ausarbeitung eines Steuerbefehls enthält, dadurch gekennzeichnet, dass sie einen logischen Schaltkreis enthält, der an zwei verschiedene Ausgänge ($s_1$, $s_2$) zwei logische Signale ($S_1$, $S_2$) anwenden kann, deren Kombination gemäss der exklusiven Oderfunktion das Abbild des Steuerbefehls ist, dass die leistungsgesteuerte Vorrichtung von einem Steuerorgan (0) gesteuert wird, welches mit seinen beiden Eingängen an die besagten zwei Ausgänge ($s_1$, $s_2$) angeschlossen ist und die logische exklusive Oderfunktion der von besagten beiden Ausgängen abgegebenen Signale ($S_1$, $S_2$) bewirkt; und dass der Ausgang ($M_1$, $M_2$ — $M'_1$, $M'_2$) des besagten Steuerorgans (0) an zwei Eingänge ($e_1$, $e_2$) der Steuervorrichtung angeschlossen ist, die für den Empfang eines Signals ($E_1$, $E_2$) vorgesehen sind, welches den Steuerzustand des von besagten Ausgängen ($s_1$, $s_2$) der Steuervorrichtung abgegebenen Signals ($S_1$, $S_2$) darstellt.

7. Vorrichtung nach Anspruch 6, in der die leistungsgesteuerte Vorrichtung aus einem von einer Wechselstromquelle (Ph) (N) versorgten Relais besteht, dadurch gekennzeichnet, dass das besagte Steuerorgan eine Brückenschaltung aufweist, die zwischen den beiden Klemmen der Stromquelle einen ersten Zweig aufweist, mit einem in Serie geschalteten ersten Widerstand ($R_1$) und einem ersten steuerbaren Schalter ($T_1$), der vom Signal ($S_1$) gesteuert wird, welches einer der obengenannten Ausgänge abgibt, und einen zweiten Zweig, mit einem zweiten Widerstand ($R_2$) und einem zweiten steuerbaren Schalter ($T_2$), der vom Signal ($S_2$) gesteuert wird, welches der zweite Ausgang ($s_2$) abgibt, und dass die beiden Klemmen der Spule (RA) des Relais jeweils an die zwei mittleren Punkte ($M_1$, $M_2$) der Brücke angeschlossen sind, welche die Verbindung zwischen dem ersten Widerstand ($R_1$) und dem ersten Schalter ($T_1$) und zwischen dem zweiten Widerstand ($R_2$) und dem zweiten Schalter ($T_2$) herstellen.

8. Vorrichtung nach Anspruch 6, in der die leistungsgesteuerte Vorrichtung aus einem von einer Gleichstromquelle gespeisten Relais besteht, dadurch gekennzeichnet, dass besagtes Steuerorgan eine Brückenschaltung aufweist, die zwischen den eine Brückenschaltung aufweist, die zwischen den beiden Klemmen der Quelle einen ersten Zweig aufweist, mit einem in Serie geschalteten ersten Widerstand (R'₁) und einem ersten steuerbaren Schalter (TR₁), der vom Signal (S₁) gesteuert wird, welches einer der besagten beiden Ausgänge (s₁) abgibt und einem zweiten Zweig, mit einem zweiten Widerstand (R'₂) und einem zweiten steuerbaren Schalter (TR₂), der vom Signal (S₂) gesteuert wird, das der zweite Ausgang (s₂) abgibt, und dass die beiden mittleren Punkte (M'₁, M'₂) der Brücke mittels einer Diodengleichrichterbrücke (D) an die Klemmen der Relaisspule (R'A) angeschlossen sind.

9. Vorrichtung nach einem der Ansprüche 7 und 8, dadurch gekennzeichnet, dass die beiden mittleren Punkte (M₁, M₂ – M'₁, M'₂) der Brückenschaltung jeweils an zwei jeweilige Eingänge (e₁, e₂) der Steuervorrichtung angeschlossen sind, die zur Aufnahme eines von besagten Ausgängen (s₁, s₂) abgegebenen Signals (E₁, E₂) vorgesehen sind.

**Claims**

1. Method for the redundant control of a power controlled device in accordance with control orders elaborated by at least one digital control device (A1, A2) and/or applied thereto, this method being more particularly characterized in that it comprises:
   – the application to the power device of a control signal resulting from a logic combination of two different logic signals (S₁, S₂) delivered by two separate outputs (s₁, s₂) of the digital control device and elaborated thereby, so that said control signal conforms to said control orders;
   – the detection of failures which may effect the signals (S₁, S₂) delivered by said outputs (s₁, s₂); and
   – when a failure of the signal emitted by one of the outputs (s1, s₂) has been detected, the modification of the signal emitted by the other output, depending on the nature of this failure, so that said logic combination always conforms to the control order.

2. Method according to claim 1, characterized in that the signals delivered by said outputs of the digital control device consist of binary signals and the combination of these signals for obtaining the control signal is achieved by the EXCLUSIVE OR function and in that, in this case, the control signal then consists of a binary signal having a state 1 in the case where, at the same time, the logic states of the signals delivered by said outputs (s₁, s₂) are different and a logic state 0 in the case where these states are identical.

3. Method according to one of claims 1 or 2, characterized in that said digital control device (A₁, A₂) includes a processor such as a programmable automaton having two outputs (s₁, s₂) adapted for delivering said two logic signals.

4. Method according to one of claims 1 or 2, characterized in that said digital control device comprises two processors (A₁, A₂) coupled together and each having an output (s₁, s₂) delivering one of said two control signals.

5. Method according to claim 4, characterized in that it comprises:
   – for generating the signal delivered by the output (s₁) of the first processor (A₁), the elaboration of a first logic signal whose two states are representative of a fault or the absence of a fault, this first logic signal being obtained by performing the EXCLUSIVE OR function of a logic signal which is the image of the control order and a logic signal coming from the EXCLUSIVE OR combination of the control state of the signal delivered by the output (s₂) of the second processor (A₂), and of a square wave signal delivered by an oscillator, and the application to the output of the first processor (A₁) of a signal resulting from the EXCLUSIVE OR combination of said first logic signal with said square wave signal; and
   – for generating the signal delivered by the output (S₂) of the second processor (A₂), the elaboration of a second logic signal whose two states are representative of a fault or absence of a fault, this second logic signal being obtained by performing the EXCLUSIVE OR function of a logic signal which is the image of the control order and a signal obtained from the logic combination of the control state of the signal delivered by the output (s₁) of the first processor (A₁) and a third signal itself resulting from the logic combination of the control order elaborated by the second processor and of said square wave signal, and the application to the output (s₂) of the second processor (A₂) of a signal resulting from the EXCLUSIVE OR combination of said second logic signal with said third signal.

6. Device for implementing the method according to one of the preceding claims, this device including at least one control device capable of elaborating a control order, characterized in that it comprises a logic circuit adapted for applying to two separate outputs (s₁, s₂) two logic signals (S₁, S₂) whose combination in accordance with the EXCLUSIVE OR logic function is the image of the control order, and in that the power device is controlled by a control member (O) connected by its two inputs to said two outputs (s₁, s₂) and performing the EXCLUSIVE OR logic function of the signals (S₁, S₂) delivered by these two outputs, and in that the output (M₁, M₂ – M'₁, M'₂) of said control member (0) is connected to two inputs (e₁, e₂) of the control device provided for receiving a signal (E₁, E₂) representative of the control state of the signal (S₁, S₂) delivered by said outputs (s₁, s₂) of the control device.

7. Device according to claim 6, in which the power controlled device is formed by a relay fed from an AC source, (Ph), (N), characterized in that said control member includes a bridge circuit with, between the two terminals of the source, a first branch comprising in series a first resistor (R₁) and a first controllable switch (T₁) controlled by the signal (S₁) delivered by one of said two outputs and a second branch including a second resistor (R₂) and a second controllable switch (T₂) controlled by the signal (S₂) delivered by the second output (s₂), and in that the two terminals of the coil (RA) of the relay are respectively connected to the two middle points

the second resistor ($R_2$) with the second witch ($T_2$).

8. Device according to claim 6, in which the power controlled device consists of a relay fed from a DC source, characterized in that said control member includes a bridge circuit having between the two terminals of the source a first branch comprising in series a first resistor ($R'_1$) and a first controllable switch ($TR_1$) controlled by the signal ($S_1$) delivered by one of said two outputs ($s_1$) and a second branch including a second resistor ($R'2$) and a second controllable switch ($TR_2$) controlled by the signal ($S_2$) delivered by the second output ($s_2$) and in that the two middle points ($M'_1$, $M'_2$) of the bridge are connected to the terminals of the coil of the relay ($R'A$) through a diode rectifying bridge ($D$).

9. Device according to one of claims 7 and 8, characterized in that the two middle points ($M_1$, $M_2$ – $M'_1$, $M'_2$) of the bridge circuit are connected respectively to two respective inputs ($e_1$, $e_2$) of the control device provided for receiving a signal ($E_1$, $E_2$) representative of the control state of the signal ($S_1$, $S_2$) delivered by said outputs ($s_1$, $s_2$) of the control device.

FIG.1

FIG.2

EP 0 250 317 B1

# FIG.3

Ph

E2

N1

R₁    RA    R₂

M1              M2

E1

T₁              T₂

S1              S2

N2

N

# FIG.4

E2

R'₁    R'₂

E1

M'₁              M'₂

D

R'A

TR₁    TR₂

S1              S2